# EUROPÄISCHE PATENTSCHRIFT

(11) **EP 0 920 950 B1**
(45) Veröffentlichungstag und Bekanntmachung des Hinweises auf die Patenterteilung: **16.07.2003**
(21) Anmeldenummer: 98122708.5
(22) Anmeldetag: 30.11.1998
(51) Int. Cl.: B23Q 5/04, B24B 23/02, B24B 41/04

(54) **Manuell handhabbares Bearbeitungsgerät**
Hand tool
Outil à main

(30) Priorität: 08.12.1997 DE 19754429
(43) Veröffentlichungstag der Anmeldung: 09.06.1999
(73) Patentinhaber: Gerd Eisenblätter GmbH, D-82538 Geretsried (DE)
(72) Erfinder: Eisenblätter, Gerd, 82549 Königsdorf (DE)
(74) Vertreter: Lang, Friedrich

(56) Entgegenhaltungen:
- CH-A- 677 893
- DE-A- 2 816 398
- DE-A- 3 229 183
- FR-A- 2 289 305
- US-A- 2 350 098
- US-A- 2 777 340
- US-A- 3 162 091

## Beschreibung

Die Erfindung betrifft ein manuell handhabbares Bearbeitungsgerät zur Oberflächenbearbeitung mit einer länglichen Antriebseinheit, die in einem Endbereich eine seitlich aus der Antriebseinheit herausragende Antriebswelle aufweist, gemäß dem Oberbegriff des Anspruchs 1, wie z.B. aus der CH-A-677 893 bekannt.

Derartige Bearbeitungsgeräte, bei denen auf die seitliche Antriebswelle ein Polier- oder Schleifwerkzeug zur Oberflächenbearbeitung aufgesetzt wird, sind bekannt. Dabei verläuft die Achse der Antriebswelle, auf der ein Schleifoder Polierrad angeordnet ist, in einem rechten Winkel zu der länglichen Antriebseinheit, die gleichzeitig auch als Handgriff dient.

Weiterhin sind derartige Bearbeitungsgeräte bekannt, bei denen mit der Antriebswelle ein Schleifband angetrieben wird, das parallel zu der Antriebseinheit ausgerichtet ist.

Der Erfindung liegt die **Aufgabe** zugrunde, ein Bearbeitungsgerät der eingangs genannten Art so auszubilden, . daß die Einsatzmöglichkeiten des Bearbeitungsgeräts erweitert werden und auch geometrisch schwer zugängliche Stellen besonders gut erreicht werden können.

Die Lösung dieser Aufgabe erfolgt bei dem oben genannten gattungsgemäßen Bearbeitungsgerät durch, die Merkmale des Anspruchs 1.

Vorteilhafte Weiterbildungen der Erfindung sind in den Unteransprüchen beschrieben.

Das erfindungsgemäße manuell handhabbare Bearbeitungsgerät dient insbesondere zur Oberflächenbehandlung mit Schleifund Polierwerkzeugen. Weiterhin sind auch Werkzeuge zum Mattieren, Satinieren, Entgraten, Aufrauhen oder zur Lackentfernung anwendbar. Das Bearbeitungswerkzeug ist jedoch auch mit scharfen Kanten oder Rändern einsetzbar, mit denen Schneid- und Fräsvorgänge durchgeführt werden können. Der Begriff Oberflächenbearbeitung ist daher sehr weit auszulegen. Das Gerät ist insbesondere zur Oberflächenbearbeitung, aber mit speziellen Werkzeugen auch für andere Zwecke einsetzbar. Die längliche Antriebseinheit weist einen Motor mit einem Getriebe in einem Gehäuse auf, wobei Motor und Getriebe so ausgelegt sind, daß aus der Antriebseinheit seitlich, insbesondere im rechten Winkel, eine Antriebswelle herausgeführt ist. An der Antriebseinheit ist im Bereich der Antriebswelle eine Verlängerungseinheit befestigt, wobei die Verlängerungseinheit in ihrem vorderen, von der Antriebseinheit entfernten Ende eine Einrichtung zur Aufnahme eines der oben genannten Bearbeitungswerkzeuge aufweist, wobei diese Einrichtung zum Ausführen einer Rotationsbewegung ausgebildet ist und an der eines der z. B. scheibenförmigen Bearbeitungswerkzeuge angebracht werden kann. Die Kraftübertragungseinrichtung der Verlängerungseinheit dient zur Verbindung der Antriebswelle mit der Einrichtung zur Aufnahme des Bearbeitungswerkzeugs, so daß die Drehbewegung der Antriebswelle in eine Drehbewegung der Einrichtung zur Aufnahme des Bearbeitungswerkzeugs übertragen werden kann. Dieses manuell handhabbare Bearbeitungsgerät ist besonders flexibel einsetzbar und kann auch an schwer zugänglichen Stellen eingesetzt werden.

In einer bevorzugten Weiterbildung der Erfindung ist die Verlängerungseinheit lösbar an der Antriebseinheit angeordnet. Zu diesem Zweck kann die Verlängerungseinheit einen Anschlußabschnitt aufweisen, der an einem zugeordneten Befestigungsabschnitt der Antriebseinheit festlegbar ist.

Dabei kann der Anschlußabschnitt der Verlängerungseinheit ringförmig und geschlitzt sein und durch ein Spannmittel, wie beispielsweise einen Spannring, zum Festlegen an dem Befestigungsabschnitt verengbar sein.

Das Festlegen kann auch mit einem Spannring erfolgen, der um entsprechend ausgebildete Nuten und Vorsprünge an der Antriebseinheit und der Verlängerungseinheit bzw. dem Befestigungsabschnitt und dem Anschlußabschnitt herumgelegt wird und der mit einer Spannschraube angezogen werden kann. Dazu kann entweder ein offener Ring mit einer Spannschraube verwendet werden oder eine Art Schelle, also ein ringförmiges Metallband, das auf der Oberfläche eine Art Zahnstange aufweist, in die eine Schraube eingreift, die fest auf der Schelle angeordnet ist und durch deren Drehbewegung der Durchmesser der Schelle verändert wird. Der Spannring oder die Schelle weisen dabei an den Rändern nach innen geneigte Vorsprünge auf, die in die zugehörigen Nuten in der Antriebseinheit und der Verlängerungseinheit eingreifen. Die Verlängerungseinheit ist dadurch auch in vorteilhafter Weise gegenüber der Längsachse der Antriebseinheit verschwenkbar, wie z. B. um die Antriebswelle oder eine dazu parallele Achse, so daß eine Anpassung des Bearbeitungsgeräts an besonders schwer zugängliche Eckbereiche möglich ist und gleichzeitig die Antriebseinheit gut handhabbar ist. In einer anderen Weiterbildung der Erfindung ist die Verlängerungseinheit derart an der Antriebseinheit verschwenkbar befestigt, daß sie gegenüber der Antriebseinheit auch beispielsweise um eine zur Antriebswelle senkrechte Achse schwenkbar ist.

Die Verlängerungseinheit weist bevorzugt eine Länge von ungefähr 40 cm auf. Zu berücksichtigen ist dabei die Anforderung, daß eine möglichst große Länge zu einer besseren Erreichbarkeit von unzulänglichen Stellen führt, aber gleichzeitig die Handhabbarkeit und Beherrschbarkeit des Geräts einschränkt. Eine Verlängerungseinheit mit einer Länge von ungefähr 40 cm erfüllt diese beiden, sich eigentlich widersprechenden Anforderungen. Dabei hängt der nötige Kraftaufwand und damit die Beherrschbarkeit des Geräts auch von der Art des verwendeten Bearbeitungswerkzeugs und der Art des Einsatzes ab. Bevorzugterweise ist daher die Verlängerungseinheit in ihrer Länge veränderlich ausgebildet, wobei die Einrichtung zur Aufnahme eines Bearbeitungswerkzeugs in einem Positionierschlitz verschoben und an der gewünschten Stelle festgestellt werden kann. Die Verlängerungseinheit ist bevorzugt schmaler als die Antriebseinheit ausgebildet, da in der Verlängerungseinheit selbst nicht der platzbenötigende Motor untergebracht werden muß. Durch diese Ausbildung wird die flexible Einsetzbarkeit des erfindungsgemäßen Bearbeitungsgeräts auch unter geometrisch schwierigen Verhältnissen weiter gesteigert.

Die Verlängerungseinheit weist bevorzugt eine Zahnscheibe oder eine Keilriemenscheibe auf, die an die Antriebswelle der Antriebseinheit angekoppelt oder auf dieser aufgesteckt ist und auf der ein Zahnriemen bzw. ein Keilriemen angeordnet ist, der um eine zweite Zahn- oder Keilriemenscheibe umläuft, die mit der Einrichtung zur Aufnahme eines Bearbeitungswerkzeugs drehfest verbunden ist. Alternativ kann auch eine flexible Welle oder eine Getriebestange mit Kegelzahnrädern, die in entsprechende Kegelzahnräder auf der Antriebswelle und an dem Bearbeitungswerkzeug eingreifen, vorgesehen sein. Diese Einrichtung zur Aufnahme eines Bearbeitungswerkzeugs ist bevorzugt als ein Spann- oder Bohrfutter ausgebildet, welches zur Aufnahme von Minischleifscheiben mit fest daran montiertem Schaft ausgebildet ist, die in das Bohrfutter eingespannt werden können. Diese Minischleifscheiben, oder allgemeiner die Oberflächenbearbeitungsscheiben, haben einen Durchmesser von ca. 6 cm. Anstelle des Bohrfutters kann alternativ eine Spannzange vorgesehen sein.

In einer anderen Weiterbildung der Erfindung ist das Bearbeitungsgerät mit einem zusätzlichen Handgriff ausgerüstet, der bevorzugt senkrecht zu der länglichen Antriebseinheit und parallel zu der Antriebswelle angeordnet ist. Der Handgriff ist dabei bevorzugt direkt an der Antriebseinheit befestigt und somit in der gleichen Ebene wie die Antriebseinheit und die Antriebswelle angeordnet. Bevorzugt ist der Handgriff über ein Winkelstück versetzt zu dieser Ebene angeordnet. Der Handgriff kann jedoch auch an der Verlängerungseinheit montiert werden, so daß der Handgriff zusammen mit der Verlängerungseinheit an der Antriebseinheit befestigt wird. Der Handgriff ist somit weitgehend in zentraler Lage des Bearbeitungsgerätes angebracht und gestattet dessen unter ergonomischen Gesichtspunkten vorteilhafte Handhabung.

In einer besonders bevorzugten Ausführungsform weist das Winkelstück zwei Befestigungseinrichtungen, insbesondere Bohrungen mit Innengewinde, auf, in die der Handgriff einschraubbar ist. Dabei befindet sich das eine Gewinde an dem 90° Winkel des Winkelstücks und das andere Gewinde am freien Ende des Winkelstücks. Dadurch kann der Handgriff je nach Bedarf entweder in einer Position parallel zur Antriebswelle oder in einer Position senkrecht zur Antriebswelle angebracht werden. In beiden Positionen ist der Handgriff dabei senkrecht zu der Antriebseinheit ausgerichtet.

Zweckmäßigerweise ist die Antriebswelle der Antriebseinheit arretierbar, so daß ein Werkzeugwechsel im drehfest gehaltenen Bohrfutter erleichtert wird.

Für die Arretierung kann eine Arrretiereinrichtung vorgesehen sein, die z. B. durch eine Druck- oder Schiebetaste an der Antriebseinheit betätigt ist und durch Form- oder Reibschlußeingriff mit der Antriebswelle diese arretiert.

Für einen vom Stromnetz unabhängigen Betrieb des Bearbeitungsgeräts ist es vorteilhaft, wenn die Antriebseinheit einen Elektro-Antriebsmotor mit einem Akkumulator für seine Stromversorgung enthält.

Nachfolgend wird die Erfindung anhand eines in der Zeichnung dargestellten Ausführungsbeispiels weiter erläutert. Im einzelnen zeigen die schematischen Darstellungen in:
- Fig. 1: eine teilweise geschnittene Draufsicht auf ein erfindungsgemäßes Bearbeitungsgerät;
- Fig. 2: eine Seitenansicht eines erfindungsgemäßen Bearbeitungsgeräts;
- Fig. 3: einen Spannring zur Verbindung von Antriebseinheit und Verlängerungseinheit;
- Fig. 4: eine Schelle zur Verbindung von Antriebseinheit und Verlängerungseinheit; und
- Fig. 5: einen wechselbaren Handgriff an dem erfindungsgemäßen Bearbeitungsgerät.

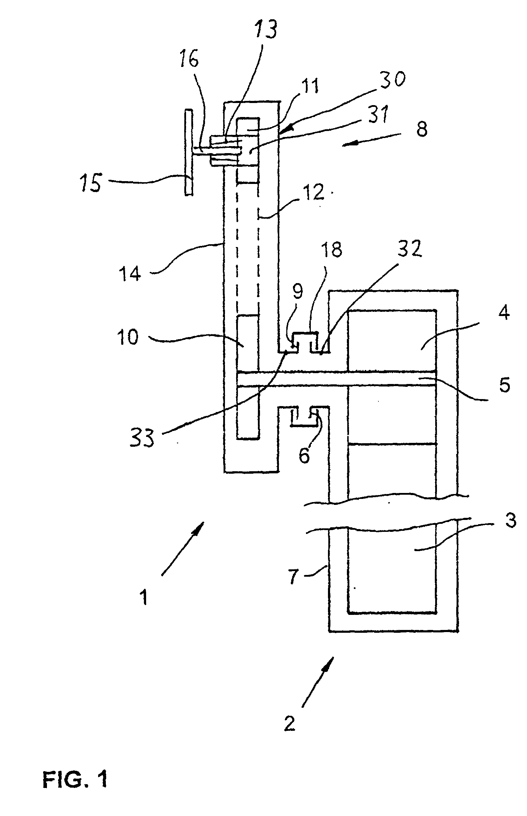

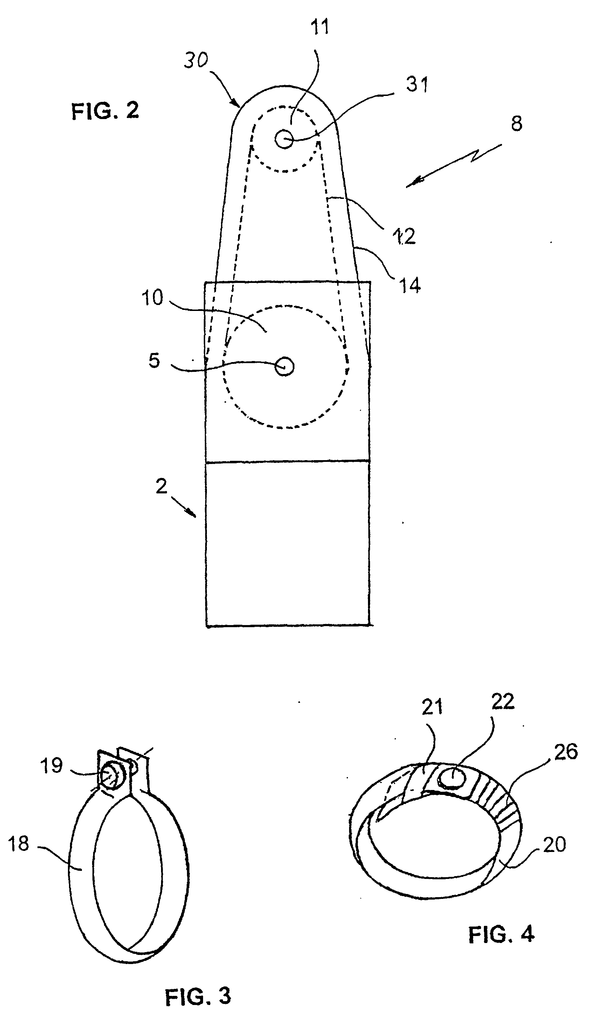

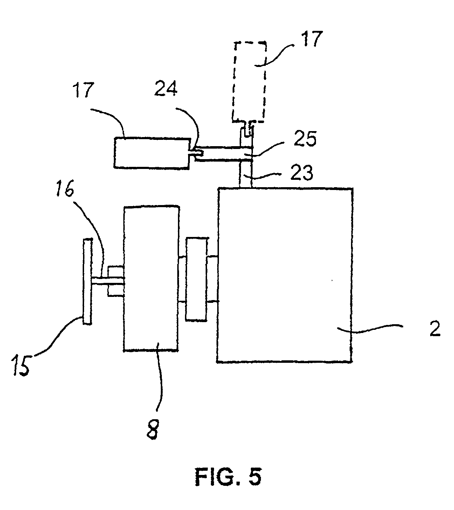

In Fig. 1 ist ein Bearbeitungsgerät 1 dargestellt, welches im wesentlichen eine Antriebseinheit 2 und eine Verlängerungseinheit 8 aufweist. Die Antriebseinheit 2 weist ein längliches, ergonomisch geformtes Gehäuse 7 auf, das auch zur Handhabung dient. In dem Gehäuse 7 ist ein Motor 3 mit einem vorgeschalteten Getriebe 4 angeordnet, wobei über das Getriebe 4 eine Antriebswelle 5 angetrieben wird, die seitlich aus dem Gehäuse 7 herausragt. In diesem Bereich enthält das Gehäuse 7 einen Befestigungsabschnitt 32, an dem die Verlängerungseinheit 8 mit ihrem Anschlußabschnitt 33 lösbar befestigt ist. Die Antriebswelle 5 greift mit ihrem hervorstehenden Bereich in eine zentrale Ausnehmung einer in der Verlängerungseinheit 8 drehbar gelagerten Zahnscheibe 10, wobei eine drehfeste Kopplung gebildet ist. Das Gehäuse 7 weist im Bereich der Antriebswelle 5 und des Befestigungsabschnitts 32 eine Öffnung auf, durch die die Antriebswelle 5 hindurchragt und die mit einer nach außen gerichteten, umlaufenden Nut 6 umgeben ist. Der Anschlußabschnitt 33 der Verlängerungseinheit 8 weist eine Öffnung gleicher Größe mit einer ebenfalls nach außen gerichteten umlaufenden Nut 9 auf, so daß die Antriebseinheit 2 und die Verlängerungseinheit 8 im zusammengefügten Zustand mit der Nut 6 der Antriebseinheit 2 und der Nut 9 der Verlängerungseinheit 8 genau aneinanderliegen. In diesem Bereich wird entweder ein Spannring 18 gemäß Figur 3 oder eine Schelle gemäß Figur 4 angebracht, um die Antriebseinheit 2 und die Verlängerungseinheit 8 fest miteinander zu verbinden. In der Verlängerungseinheit 8 ist die erste Zahnscheibe 10 oder Keilriemenscheibe drehbar gelagert, die mit der Antriebswelle 5 der Antriebseinheit 2 drehfest gekoppelt und durch diese angetrieben wird. In der Verlängerungseinheit 8 ist am vorderen, von der Antriebseinheit 2 abgewandten Ende 30 eine zweite Zahnscheibe 11 bzw. Keilriemenscheibe drehbar gelagert, die mit der ersten Zahn- bzw. Keilriemenscheibe 10 über einen Zahn- bzw. Keilriemen 12 verbunden ist. Dabei hat die zweite Zahnscheibe 11 einen kleineren Durchmesser als die erste Zahnscheibe 10, so daß sich die zweite Zahnscheibe 11 gegenüber der ersten Zahnscheibe 10 mit einer ins Schnelle übersetzten, höheren Drehzahl dreht. Die Keilriemenscheibe 11 ist mit einer Lagerwelle 31 verbunden, die ein zentrales Spann- oder Bohrfutter 13 aufweist, das sich zu der von der Antriebseinheit 2 abgewandten Seite der Verlängerungseinheit 8 hin öffnet und in das unterschiedliche Bearbeitungswerkzeuge eingespannt werden können. Gemäß Fig. 1 ist in das Bohrfutter 13 ein Schaft 16 einer Schleifscheibe 15 eingespannt. Die Schleifscheibe 15 kann Schleifpapier oder Lamellen auf ihrer Vorderseite aufweisen und so als Oberflächenbearbeitungswerkzeug verwendet werden. Ebenso können Scheiben mit scharfkantigen Rändern verwendet werden, so daß das Bearbeitungswerkzeug zum Trennen und Fräsen verwendet werden kann. Ein Gehäuse 14 der Verlängerungseinheit 8 und das Gehäuse 7 der Antriebseinheit 2 überlappen sich in einem gewissen Bereich, der größer ist als die mit dem Spannring 3 miteinander verbundenen Öffnungen, so daß der Spannring von den Gehäusen etwas abgedeckt wird und so die Spannschraube nicht scharfkantig hervortritt. Die Verlängerungseinheit 8 ist gegenüber der Antriebseinheit 2 in unterschiedlichen Schwenkstellungen festlegbar, indem beispielsweise der Spannring 18 oder die Schelle gelockert werden und die Verlängerungseinheit 8 dann gegenüber der Antriebseinheit 2 bis in die gewünschte Stellung verschwenkt wird, woraufhin der Spannring 18 oder die Schelle wieder angezogen werden, bis eine drehfeste, sichere Verbindung zwischen der Antriebseinheit 2 und der Verlängerungseinheit 8 hergestellt ist. Im Überlappungsbereich der Verlängerungseinheit 8 und der Antriebseinheit 2 ist an der Antriebseinheit 2 ein Handgriff 17 (siehe Figur 5) befestigt, der z. B. parallel oder senkrecht zur Antriebswelle 5 und zur Rotationsachse des Bearbeitungswerkzeugs 15 ausgerichtet sein kann.

In Figur 2 ist eine Seitenansicht des Bearbeitungsgeräts 1 in Richtung der Antriebswelle 5 dargestellt. Im vorderen Bereich der Antriebseinheit 2 ist die Verlängerungseinheit 8 angesetzt, die die mit der Antriebswelle 5 der Antriebseinheit 2 gekoppelte erste, große Zahnscheibe 10 aufweist, welche über den Zahnriemen 12 die vordere, kleine Zahnscheibe 11 antreibt. Die Lagerwelle 31 der vorderen kleinen Zahnscheibe 11 enthält das Spann- oder Bohrfutter 13, welches zur Aufnahme von Schleifscheiben mit Schaft dient. Das Gehäuse 14 der Verlängerungseinheit 8 ist in seiner Geometrie an die Größe der Zahnscheiben 10 und 11 angepaßt, woraus sich zum vorderen Ende 30 schmal zulaufende Abmessungen des Gehäuses 14 ergeben. Im vorderen Enbereich 30 ist das Gehäuse 14 abgerundet und in seiner Form und Größe an die vordere Zahnscheibe 11 angepaßt, so daß das Gehäuse 14, das im übrigen in Richtung der Antriebswelle 5 auch sehr flach gestaltet ist, möglichst klein und abgerundet ist und dadurch auch schwer zugängliche Stellen besonders gut erreichbar sind. Der Abstand zwischen den Drehachsen der beiden Zahn- oder Keilriemenscheiben 10 und 11 beträgt etwa 40 cm. Das Gehäuse 14 kann aus zwei Schalenhälften gebildet sein, wobei an der einen Schalenhälfte der Anschlußabschnitt 33 angeformt sein kann.

In Figur 3 ist ein Spannring 18 dargestellt, mit dem die Antriebseinheit 2 und die Verlängerungseinheit 8 verbunden werden. Der Spannring 18 weist ein U-förmiges Profil auf, was bedeutet, daß seine beiden äußeren, nach innen in den Spannring hineinragenden Kanten hinter die Nuten 6 und 9 der Antriebseinheit 2 bzw. der Verlängerungseinheit 8 eingreifen. Der Durchmesser des Spannrings 18 wird über eine Spannschraube 19 verändert. Im geschlossenen Zustand, also bei komplett angezogener Spannschraube 19, ist der Durchmesser des Spannrings 18 gerade so groß, daß er dann fest an den Nuten 6 und 9 anliegt und die Antriebseinheit 2 und die Verlängerungseinheit 8 fest miteinander verbindet.

In Figur 4 ist eine alternativ zu dem Spannring 18 anwendbare Schelle 20 dargestellt, die an ihrem innenliegenden Ende eine Spanneinrichtung 21 aufweist, die aus einer nach oben gewölbten Einführöffnung besteht, in die das andere Ende des Bandes eingeführt wird und eine in Längsrichtung zu dem Band liegende Spannschraube 22 aufweist, die in entsprechende Zähne 26 eingreift, die in dem Verstellbereich auf der Schelle 20 angeordnet sind. Die Schelle 20 weist genau wie der Spannring 18 einen U-förmigen Querschnitt auf, wobei die seitlichen Stege, die hinter die Nuten 6 und 9 greifen, in dem Verstellbereich der Verstelleinrichtung 21 nicht vorhanden sind.

In Figur 5 ist eine Frontansicht des Bearbeitungsgeräts dargestellt, aus der die Anordnung des Handgriffs 17 deutlich wird. An der Antriebseinheit 2 ist im Überlappungsbereich zu der Verlängerungseinheit 8 ein Winkelstück 23 angebracht, welches sich zunächst senkrecht zur Antriebswelle 5 nach oben und dann im rechten Winkel dazu parallel zur Antriebswelle 5 erstreckt. Das Winkelstück 23 weist zwei Gewinde 24 und 25 auf, deren Lage ebenfalls senkrecht zueinander ist, so daß in diese Gewinde 24 und 25 wahlweise ein Handgriff 17 eingeschraubt werden kann und so je nach Bedarf ein parallel oder senkrecht zur Antriebswelle 5 und zum Bearbeitungswerkzeug 15 ausgerichteter Handgriff 17 zur Verfügung steht.

## Patentansprüche

1. Manuell handhabbares Bearbeitungsgerät (1) zur Oberflächenbearbeitung mit einen länglichen Antriebseinheit (2), die in einem Endbereich eine seitlich aus der Antriebseinheit (2) herausragende Antriebswelle (5) und einen Handgriff aufweist, und mit einer an der Antriebseinheit (2) angeordneten Verlängerungseinheit (8), die eine Einrichtung zur Aufnahme eines Bearbeitungswerkzeugs an ihrem vorderen Endbereich sowie einen Riementrieb zur Übertragung der Drehung der Antriebswelle (5) auf die Einrichtung zur Aufnahme des Bearbeitungswerkzeugs aufweist, **dadurch gekennzeichnet, dass** die Verlängerungseinheit (8) schwenkbar an der Antriebseinheit (2) befestigt ist,
der Handgriff (17) an der Antriebseinheit (2) oder an der Verlängerungseinheit (8) in unterschiedlichen Positionierungen festlegbar ist,
die Einrichtung zur Aufnahme eines Bearbeitungswerkzeugs als Bohrfutter (13) ausgebildet ist, und
die Verlängerungseinheit (8) eine Kraftübertragungseinrichtung (10,11,12) aufweist, die bei der Übertragung der Drehung der Antriebswelle (5) auf das Bohrfutter (13) die Drehzahl des Bohrfutters (13) ins Schnelle übersetzt.

2. Bearbeitungsgerät nach Anspruch 1,
**dadurch gekennzeichnet,**
**dass** die Verlängerungseinheit (8) lösbar an der Antriebseinheit (2) befestigt ist.

3. Bearbeitungsgerät nach Anspruch 1 oder 2,
**dadurch gekennzeichnet,**
**dass** die Verlängerungseinheit (8) mit einem Spannring (18) an der Antriebseinheit (2)

4. Bearbeitungsgerät nach Anspruch 1 oder 2,
**dadurch gekennzeichnet,**
**dass** die Verlängerungseinheit (8) mit einer Schelle (20) an der Antriebseinheit (2) befestigt ist.

5. Bearbeitungsgerät nach einem der Ansprüche 1 bis 4,
**dadurch gekennzeichnet,**
**dass** die Verlängerungseinheit (8) in ihrer Länge veränderlich ist.

6. Bearbeitungsgerät nach einem der Ansprüche 1 bis 5,
**dadurch gekennzeichnet,**
**dass** die Verlängerungseinheit (8) schmaler als die Antriebseinheit (2) ausgebildet ist.

7. Bearbeitungsgerät nach einem der Ansprüche 1 bis 6,
**dadurch gekennzeichnet,**
**dass** die Verlängerungseinheit (8) zwei Keilriemenräder (10, 11) aufweist.

8. Bearbeitungsgerät nach einem der Ansprüche 1 bis 6,
**dadurch gekennzeichnet,**
**dass** die Verlängerungseinheit (8) einen Zahnriemen zur Übertragung der Drehung der Antriebswelle (5) auf die Einrichtung zur Aufnahme eines Bearbeitungswerkzeugs aufweist.

9. Bearbeitungsgerät nach einem der Ansprüche 1 bis 5,
**dadurch gekennzeichnet,**
**dass** der Handgriff (17) senkrecht zu der Antriebseinheit (2) angeordnet ist.

10. Bearbeitungsgerät nach einem der Ansprüche 1 bis 9,
**dadurch gekennzeichnet,**
**dass** der Handgriff (17) an einem Winkelstück (23) befestigt ist.

11. Bearbeitungsgerät nach Anspruch 10
**dadurch gekennzeichnet,**
**dass** das Winkelstück (23) zwei Gewinde (24, 25) aufweist, in die der Handgriff (17) wahlweise einschraubbar ist.

## Claims

1. A manual working appliance (1) for surface treatment, comprising an elongate drive unit (2) which has, in an end region, a drive shaft (5) protruding laterally out of the drive unit (2) and a handle, and an extension unit (8) arranged on the drive unit (2), the extension unit having at a front end region a device for receiving a working tool, a power transmission device for transmitting the rotation of the drive shaft (5) to the device for receiving a working tool,
**characterised in that**
the extension unit (8) is fastened on the drive unit in such a way that in can be swivelled, the handle (17) can be fixed in different positions on the drive unit (2) or the extension unit (8),
the device for receiving a working tool is designed as a drill chuck (13), and
the extension unit (8) has a power transmission device (10, 11, 12) for transmitting the rotation of the drill chuck (13) into a higher speed when transmitting the rotation of the drive shaft (5) to the drill chuck.

2. A working appliance as claimed in claim 1,
**characterised in that**
the extension unit (8) is fastened detachably on the drive unit (2).

3. A working appliance as claimed in claim 1 or 2,
**characterised in that**
the extension unit (8) is fastened on the drive unit (2) by a clamping ring (18).

4. A working appliance as claimed in claim 1 or 2,
**characterised in that**
the extension unit (8) is fastened on the drive unit (2) by a clip (20).

5. A working appliance as claimed in one of claims 1 to 4,
**characterised in that**
the extension unit (8) is variable in its length.

6. A working appliance as claimed in one of claims 1 to 5,
**characterised in that**
the extension unit (8) is made narrower than the drive unit (2).

7. A working appliance as claimed in one of claims 1 to 6,
**characterised in that**
the extension unit (8) has two V-belt pulleys (10, 11).

8. A working appliance as claimed in one of claims 1 to 6,
**characterised in that**
the extension unit (8) has a toothed belt for transmitting the rotation of the drive unit (5) to the device for receiving a working tool.

9. A working appliance as claimed in one of claims 1 to 5,
**characterised in that**
the handle (17) is arranged perpendicular to the drive unit (2).

10. A working appliance as claimed in one of claims 1 to 9,
**characterised in that**
the handle (17) is fastened to an angle piece (23).

11. A working appliance as claimed in claim 10,
**characterised in that**
the angle piece (23) has two threads (24, 25), into which the handle (17) can be screwed according to choice.

## Revendications

1. Appareil d'usinage (I) utilisable à la main pour l'usinage de surfaces, avec une unité d'entraînement oblongue (2) qui présente, dans une partie d'extrémité, un arbre d'entraînement (5) sortant latéralement de l'unité d'entraînement (2) et une poignée, et avec, placée sur l'unité d'entraînement (2), une unité de prolongement (8) qui présente un dispositif pour recevoir un outil d'usinage sur sa zone d'extrémité avant, ainsi qu'une transmission par courroie pour transmettre la rotation de l'arbre d'entraînement (5) au dispositif pour recevoir l'outil d'usinage, ***caractérisé en ce que***
l'unité de prolongement (8) est fixée pivotante sur l'unité d'entraînement (2),
la poignée (17) peut être immobilisée dans différentes positions sur l'unité d'entraînement (2) ou sur l'unité de prolongement (8),
le dispositif pour recevoir un outil d'usinage est conformé en mandrin (13) de perceuse, et
l'unité d'entraînement (8) présente un dispositif de transmission de force (10, 11, 12) qui, lors de la transmission de la rotation de l'arbre d'entraînement (5) au mandrin (13) de perceuse, augmente la vitesse de rotation du mandrin (13) de perceuse.

2. Appareil d'usinage selon la revendication 1, ***caractérisé en ce que*** l'unité de prolongement (8) est fixée de manière amovible sur l'unité d'entraînement (2).

3. Appareil d'usinage selon la revendication 1 ou 2, ***caractérisé en ce que*** l'unité de prolongement (8) est fixée sur l'unité d'entraînement (2) par une bague de serrage (18).

4. Appareil d'usinage selon la revendication 1 ou 2, ***caractérisé en ce que*** l'unité de prolongement (8) est fixée à l'unité d'entraînement (2) par un collier (20).

5. Appareil d'usinage selon l'une quelconque des revendications 1 à 4, ***caractérisé en ce que*** l'unité d'entraînement (8) est de longueur variable.

6. Appareil d'usinage selon l'une quelconque des revendications 1 à 5, ***caractérisé en ce que*** l'unité de prolongement (8) est réalisée plus étroite que l'unité d'entraînement (2).

7. Appareil d'usinage selon l'une quelconque des revendications 1 à 6, ***caractérisé en ce que*** l'unité de prolongement (8) présente deux roues (10, 11) à courroie trapézoïdale.

8. Appareil d'usinage selon l'une quelconque des revendications 1 à 6, ***caractérisé en ce que*** l'unité d'entraînement (8) présente une courroie dentée pour transmettre la rotation de l'arbre d'entraînement (5) au dispositif pour recevoir un outil d'usinage.

9. Appareil d'usinage selon l'une quelconque des revendications 1 à 5, ***caractérisé en ce que*** la poignée (17) est placée perpendiculairement à l'unité d'entraînement (2).

10. Appareil d'usinage selon l'une quelconque des revendications 1 à 9, ***caractérisé en ce que*** la poignée (7) est fixée sur une pièce d'angle (23).

11. Appareil d'usinage selon la revendication 10, ***caractérisé en ce que*** la pièce d'angle (23) présente deux filetages (24, 25) dans lesquels la poignée (17) peut se visser au choix.
